# FASCICULE DE BREVET EUROPEEN

(11) **EP 0 410 839 B1**
(45) Date de publication et mention de la délivrance du brevet: **03.04.1996**
(21) Numéro de dépôt: 90402003.9
(22) Date de dépôt: 12.07.1990
(51) Int. Cl.: H05B 3/84, B32B 17/00, C03C 17/34

(54) **Vitrage automobile chauffant et réfléchissant**
Heizbares und reflektierendes Kraftfahrzeugfenster
Heatable and reflecting vehicle window

(30) Priorité: 22.07.1989 DE 3924276
(43) Date de publication de la demande: 30.01.1991
(73) Titulaire: SAINT-GOBAIN VITRAGE, F-92400 Courbevoie (FR); VEGLA Vereinigte Glaswerke GmbH, D-52066 Aachen (DE)
(72) Inventeur: Hans, Alfred, D-5106 Roetgen (DE); Termath, Günter, D-4650 Gelsenkirchen (DE)
(74) Mandataire: Muller, René

(56) Documents cités:
- DE-A- 2 240 409
- FR-A- 1 464 585
- FR-A- 2 151 740
- FR-A- 2 279 687
- US-A- 4 000 346
- US-A- 4 725 710

## Description

L'invention concerne un vitrage automobile chauffant électriquement et réfléchissant les rayons calorifiques.

Les vitrages automobiles connus qui remplissent les deux fonctions précédentes, c'est-à-dire qui d'une part possèdent un pouvoir de réflexion des rayons calorifiques élevé et qui sont d'autre part chauffants grâce à l'énergie électrique de manière à éliminer à la fois les condensations sur leur face intérieure et la neige ou la glace sur leur face extérieure, sont équipés d'un dépôt superficiel conduisant l'électricité. Ce dépôt est constitué de plusieurs couches superposées, l'une d'elles étant métallique, par exemple à base d'argent. Ce dépôt superficiel joue d'une part le rôle d'une résistance chauffante, et d'autre part simultanément celui d'une couche réfléchissante pour les rayons du soleil atteignant le vitrage du côté externe et pour les rayons calorifiques de grande longueur d'onde provenant de l'intérieur.

Les vitrages automobiles, en règle générale, doivent avoir un facteur de transmission pour la lumière visible élevé. Comme la couche mince constituant la résistance chauffante est une couche métallique, il faut que le dépôt superficiel soit très mince. Dans les conditions qui existent actuellement avec toutes les compositions de couches minces connues la résistance électrique d'une telle couche est si élevée qu'un tel vitrage ne peut être chauffé à l'aide de la tension de 12 volts disponible dans les automobiles. Pour obtenir son chauffage il est nécessaire d'utiliser des tensions beaucoup plus élevées, pour les atteindre il est donc nécessaire de disposer d'équipements électriques supplémentaires qui entraînent de leur côté un coût plus important.

Il est également connu et de pratique courante d'équiper le vitrage sur sa face interne de conducteurs étroits obtenus par la cuisson d'un émail déposé sur le verre. De tels vitrages chauffent grâce à la tension habituelle de 12 volts. Cependant, à la différence des vitrages chauffants équipés de couches minces continues, ils ne peuvent jouer aucun rôle dans la protection solaire.Le document FR-A-1 464 585 ayant les caractéristiques du préambule de la revendication 1 décrit un vitrage automobile comportant un réseau de fils conducteurs alimentés à l'aide de collecteurs, l'ensemble étant réalisé en un même émail cuit comportant de l'argent métallique, et l'alimentation électrique étant prévue en utilisant la tension de bord habituelle des véhicules.

Par ailleurs, il est connu selon la demande de brevet allemande DE-A- 22 40 409 de réaliser un vitrage réfléchissant la chaleur grâce à des dépôts superficiels en y déposant des couches de borures, carbures, nitrures, carbonitrures, ainsi que de sous-oxydes des métaux suivants : titane, zirconium, hafnium, vanadium, niobium, tantale, chrome, molybdène, et tungstène. Cependant, ces couches à cause de leur résistance électrique relativement importante ne peuvent jouer le rôle de résistance chauffante sur le vitrage.

Du brevet FR-A-2 151 740, il est connu en outre un procédé de fabrication de vitrage chauffant consistant à déposer sur le vitrage un réseau conducteur constitué d'un unique fil conducteur ininterrompu et comportant de place en place des élargissements en différents points de sa longueur, puis à effectuer un traitement galvanoplastique du réseau ainsi déposé.

L'invention se donne pour mission de fournir un vitrage automobile qui d'une part possède sur toute sa surface la propriété de réfléchir l'énergie solaire et les rayons calorifiques de grande longueur d'onde et qui joue de plus le rôle d'un vitrage chauffant alimenté grâce à la tension de bord habituelle du véhicule.

Le vitrage automobile selon l'invention se caractérise par le fait que sa surface du côté dirigé vers l'intérieur de l'habitacle est équipée de conducteurs électriques constitués d'un émail comportant de l'argent métallique et par ailleurs que cette même surface est recouverte d'une couche réfléchissante qui couvre à la fois la surface du verre et les conducteurs et qui est déposée par un procédé sous vide et qu'elle comporte des composés métalliques résistants à l'abrasion et à la corrosion appartenant au groupe des borures, carbures, nitrures, carbonitrures, ainsi que de sous-oxydes des métaux : titane, zirconium, hafnium, vanadium, niobium, tantale, chrome, molybdène, et tungstène.

L'invention a ainsi pour objet un vitrage chauffant électriquement comportant un réseau de fils conducteurs en émail conducteur alimentés à l'aide de collecteurs, réseau et collecteurs étant constitués d'un même émail cuit comportant de l'argent métallique et se situent sur la face du vitrage tournée vers l'intérieur de l'habitacle. L'alimentation en électricité est prévue en utilisant simplement la tension de bord habituelle des véhicules. Le dit vitrage réfléchit également les rayons calorifiques sur toute sa surface à l'aide d'une couche semi-réfléchissante résistant à l'abrasion et à la corrosion, de résistance électrique superficielle de 50 à 600 ohms par carré déposée par une technique de dépôt sous vide de manière à couvrir toute la surface du vitrage dirigée vers l'intérieur de l'habitacle, celle du réseau de fils ainsi que celle des collecteurs associés aux fils, ladite couche étant constituée d'un composé métallique du groupe des borures, carbures, nitrures, carbonitrures et oxydes ou sous-oxydes des métaux : aluminium, titane, zirconium, vanadium, chrome, molybdène et tungstène.

Selon l'invention, les fonctions du chauffage électrique du vitrage et de la réflexion du rayonnement sont prises en charge par deux éléments différents qui chacun se sont révélées efficaces pour remplir leur fonction propre. De manière surprenante, on a constaté que la couche qui recouvre la surface du verre et les conducteurs et qui possède elle-même une certaine conductivité électrique grâce aux éléments métalliques qu'elle comporte, ne perturbe pas la fonction de chauffage des conducteurs mais encore qu'elle contribue à une répartition plus homogène de la puissance de chauffe, qu'elle montre des caractéristiques d'adhérence sur les conducteurs et dans la zone de transition entre les conducteurs et la surface de verre et que, d'un autre côté, la régularité de la couche superficielle semi-réfléchissante n'est pas perturbée par les conducteurs. On obtient de la sorte des vitrages automobiles dont la puissance de chauffe, les caractéristiques électriques, les performances de réflexion et de protection thermique ou solaire peuvent être modifiées indépendamment les unes des autres dans des marges importantes pour s'adapter aux nécessités de leur utilisation.

La couche réfléchissant le rayonnement a avantageusement une épaisseur de 20 à 100 nanomètres et une résistance superficielle de 50 à 600 ohms par carré. En plus de ces caractéristiques, sa transmission dans le domaine visible va de 10 à 60 % et avantageusement de 30 à 50 % et sa réflexion des rayons calorifiques, c'est-à-dire dans le domaine spectral supérieur à 1 µm doit être de préférence de 25 à 80 % et avantageusement de 40 à 70 %.

Les résultats sont particulièrement bons lorsque la couche réfléchissante est constituée de nitrure de titane.

Le dépôt de la couche réfléchissante peut être effectué par l'une des méthodes connues adaptées. La technique de la pulvérisation cathodique assistée par le champ magnétique d'un magnétron s'est révélée très intéressante pour effectuer ce dépôt.

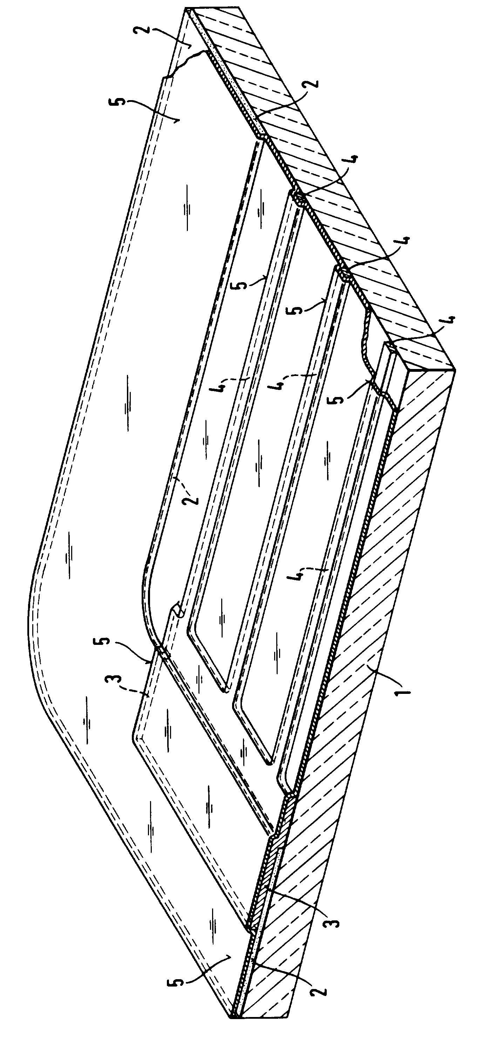

La figure représente en détail un mode de réalisation préféré. On y voit une vue partielle en perspective d'un vitrage constitué conformément à l'invention.

Le vitrage automobile présenté est chauffant et réfléchissant, il s'agit d'une lunette arrière qui est fixée par collage dans la baie de la carrosserie directement sur la tôle. Le vitrage est constitué d'une plaque de verre silico-sodo-calcique 1 trempée d'une épaisseur d'environ 5 mm, la trempe est une trempe thermique. Le vitrage 1 est équipé de plusieurs couches du côté, qui, lorsqu'il est en position sur le véhicule se trouve tourné vers l'intérieur de l'habitacle.

On voit d'abord sur le vitrage 1 le long de sa périphérie une couche 2 en forme de cadre qui est constituée d'un émail opaque. La couche 2 en forme de cadre a pour première fonction d'empêcher de voir la colle au travers du vitrage. Sa deuxième fonction est de protéger les matériaux de collage de l'action des rayons ultra-violets qui pourraient conduire à leur dégradation et à leur fissuration.

La technique de dépôt de la couche 2 en forme de cadre est une technique de transfert, par exemple une sérigraphie à l'aide d'un écran de soie.

La couche suivante est également constituée d'un émail à chaud mais celui-ci est conducteur. Il est déposé sous la forme d'un collecteur 3 et de fils étroits 4. Le collecteur 3 se trouve déposé pour l'essentiel sur la couche 2 en forme de cadre mais il déborde vers l'intérieur du vitrage où il rejoint les fils 4. La couche constituant le collecteur 3 et les fils 4 est réalisée à l'aide d'un émail dont la composition comporte de l'argent métallique. L'émail est déposé par une technique de transfert à l'écran de soie selon un procédé connu en soi. La largeur des fils 4 est en règle générale comprise entre 0,4 et 0,6 mm. Leur épaisseur va de 15 à 30 µm.

La couche superficielle 5 est transparente. Elle a une épaisseur régulière d'environ 30 nanomètres aussi bien sur la surface du verre que sur les couches opaques qui viennent d'être décrites. Sa transmission lumineuse dans le domaine visible est d'environ 40 % et sa résistance superficielle de l'ordre de 350 ohms par carré. Cette couche est optiquement homogène et a un très bon comportement, en particulier une excellente résistance à l'abrasion et une bonne tenue à la corrosion.

Pour fabriquer le vitrage automobile qui vient d'être décrit, on commence par découper un verre plat selon la forme qui permettra d'obtenir le vitrage 1. Puis on dépose à la périphérie de la plaque la couche 2 par sérigraphie, celle-ci est ensuite séchée. Après le séchage de la couche 2 en forme de cadre, on dépose la couche conductrice constituant le collecteur 3 et les fils 4, celle-ci étant déposée elle aussi par le même procédé puis séchée. Enfin, le verre recouvert de ces différentes couches est porté à 650 degrés Celsius puis bombé à la forme voulue et enfin trempé à l'air. Au cours du chauffage jusqu'à la température du bombage les émaux fondent et se marient avec la surface du verre.

A l'issue de la trempe, le vitrage équipé de ses couches est soigneusement nettoyé puis introduit dans une installation de pulvérisation cathodique à magnétron. On y dépose alors une couche de nitrure de titane d'une épaisseur de 30 nanomètres par pulvérisation cathodique réactive.

A la place d'une simple couche en nitrure de titane on peut déposer une couche multiple si on le souhaite. De telles couches multiples avec les propriétés adéquates de réflexion des infra-rouges, de transmission dans le domaine visible, de conductivité électrique, d'aspect et de comportement sont du domaine des techniques connues.

Les collecteurs 3 et les fils 4 peuvent avant d'être recouverts par la couche semi-réfléchissante subir un traitement supplémentaire qui diminue leur résistance électrique et/ou améliore leur aspect. On peut par exemple utiliser une méthode de galvanisation pour déposer une couche de cuivre et/ou de nickel. Une telle technique de traitement de couches conductrices déposées sur le verre est classique et bien connue. On a constaté que les avantages procurés par l'invention se retrouvaient dans le cas des vitrages chauffants ayant subis un tel traitement de galvanisation. On a également remarqué que ce traitement ne modifiait en rien la phase de dépôt sous vide qui donne les mêmes résultats sur les métaux déposés par galvanisation.

## Revendications

1. Vitrage automobile chauffant électriquement comportant un réseau de fils conducteurs (4) en émail conducteur alimentés à l'aide de collecteurs (3), ce réseau de fils conducteurs (4) et les collecteurs (3) sont constitués d'un même émail cuit comportant de l'argent métallique et se situent sur la face du vitrage tournée vers l'intérieur de l'habitacle, l'alimentation en électricité étant prévue en utilisant la tension de bord habituelle des véhicules caractérisé en ce que ledit vitrage réfléchit également les rayons calorifiques sur toute sa surface à l'aide d'une couche (5) servi-réfléchissante résistant à l'abrasion et à la corrosion, de résistance électrique superficielle de 50 à 600 ohms par carré, déposée par une technique de dépôt sous vide de manière à couvrir toute la surface du vitrage tournée vers l'intérieur de l'habitacle, celle du réseau de fils (4) ainsi que celle des collecteurs (3) associés aux fils (4), ladite couche étant constituée d'un composé métallique du groupe des borures, carbures, nitrures, carbonitrures et oxydes ou sous-oxydes des métaux : aluminium, titane, zirconium, vanadium, chrome, molybdène et tungstène.

2. Vitrage automobile selon la revendication 1, caractérisé en ce que les fils conducteurs (4)ont une largeur comprise entre 0,4 et 0,6 millimètres et une épaisseur comprise entre 15 et 20 micromètres.

3. Vitrage automobile selon l'une des revendications 1 ou 2, caractérisé en ce que la couche semi-réfléchissante (5) a une épaisseur de 20 à 100 nanomètres.

4. Vitrage automobile selon l'une des revendications précédentes, caractérisé en ce que la transmission lumineuse de la couche servi-réfléchissante (5) dans le domaine visible est comprise entre 10 et 60 % et la réflexion dans le domaine spectral supérieur à 1 µm est comprise entre 25 et 70 %.

5. Vitrage automobile selon l'une des revendications précédentes, caractérisé en ce que la couche servi-réfléchissante (5) est constituée de nitrure de titane.

6. Vitrage automobile selon l'une des revendications précédentes, caractérisé en ce que les fils conducteurs (4) et les collecteurs (3) sont revêtus d'une couche métallique telle que le cuivre et/ou le nickel déposée par galvanisation.

7. Vitrage automobile selon l'une des revendications précédentes, caractérisé en ce qu'est déposé, préalablement au réseau de fils (4) et collecteurs (3), sur la périphérie de la face du vitrage tournée vers l'habitacle une couche d'émail (2) non-conducteur opaque.

8. Vitrage automobile selon la revendication 7, caractérisé en ce que les collecteurs (3) sont déposés pour l'essentiel sur la couche d'émail périphérique (2) et débordent vers l'intérieur du vitrage pour rejoindre les fils conducteurs (4).

9. Vitrage automobile selon l'une des revendications précédentes, caractérisé en ce que la couche semi-réfléchissante (5) est déposée selon la technique de pulvérisation cathodique réactive à magnétron.

## Patentansprüche

1. Elektrisch beheizbare Autoglasscheibe mit einem Netz von Leitern (4) aus einem leitenden Email, die über Sammelschienen (3) mit Strom versorgt werden, wobei das Netz der Leiter (4) und die Sammelschienen (3) aus der gleichen, metallisches Silber umfassenden Einbrennfarbe bestehen und auf der dem Fahrgastraum zugewandten Seite der Glasscheibe angeordnet sind, und für die Stromversorgung die übliche Bordspannung benutzt wird, **dadurch gekennzeichnet**, daß die Glasscheibe auch die Wärmestrahlung auf ihrer gesamten Oberfläche mit Hilfe einer teilreflektierenden, abrieb- und korrosionsfesten Schicht (5) mit einem elektrischen Flächenwiderstand von 50 bis 600 Ohm pro Quadrateinheit reflektiert, die durch ein Vakuumverfahren so aufgebracht wurde, daß sie die gesamte dem Fahrgastraum zugewandte Oberfläche, die Oberfläche des Leiternetzes (4) und der mit den Leitern (4) verbundenen Sammelschienen (3) bedeckt, wobei diese Schicht aus einer Metallverbindung aus der Gruppe der Boride, Karbide, Nitride, Karbonitride und Oxide oder Suboxide der Metalle Aluminium, Titan, Zirkonium, Vanadium, Chrom, Molybdän und Wolfram besteht.

2. Autoglasscheibe nach Anspruch 1, dadurch gekennzeichnet, daß die Leiter (4) eine Breite von 0,4 bis 0,6 Millimetern und eine Dicke von 15 bis 20 Mikrometern aufweisen.

3. Autoglasscheibe nach Anspruch 1 oder 2, dadurch gekennzeichnet, daß die teilreflektierende Schicht (5) eine Dicke von 20 bis 100 Nanometern aufweist.

4. Autoglasscheibe nach einem der voraufgehenden Ansprüche, dadurch gekennzeichnet, daß die Lichttransmission der teilreflektierenden Schicht (5) im sichtbaren Bereich 10 bis 60 %, und die Reflexion im Spektralbereich oberhalb von 1 µm 25 bis 70 % beträgt.

5. Autoglasscheibe nach einem der voraufgehenden Ansprüche, dadurch gekennzeichnet, daß die teilreflektierende Schicht (5) aus Titannitrid besteht.

6. Autoglasscheibe nach einem der voraufgehenden Ansprüche, dadurch gekennzeichnet, daß die Leiter (4) und die Sammelschienen (3) mit einem durch Galvanisierung aufgebrachten metallischen Überzug aus einem Metall wie Kupfer und/oder Nickel versehen sind.

7. Autoglasscheibe nach einem der voraufgehenden Ansprüche, dadurch gekennzeichnet, daß vor dem Aufbringen des Leiternetzes (4) und der Sammelschienen (3) am Rand auf der dem Fahrgastraum zugewandten Seite der Glasscheibe eine Schicht (2) aus einem lichtundurchlässigen nichtleitenden Email aufgebracht ist.

8. Autoglasscheibe nach Anspruch 7, dadurch gekennzeichnet, daß die Sammelschienen (3) im wesentlichen auf die Randschicht (2) aus Email aufgebracht sind und in Richtung auf das Mittelfeld der Glasscheibe darüber hinausragen und mit den Leitern (4) in Verbindung stehen.

9. Autoglasscheibe nach einem der voraufgehenden Ansprüche, dadurch gekennzeichnet, daß die teilrefektierende Schicht (5) nach der Technik der reaktiven magnetfeldunterstützten Katodenzerstäubung aufgebracht ist.

## Claims

1. Electrically heating automobile pane, comprising a network of conductor wires (4) in conducting enamel supplied by collectors (3), this network of conductor wires (4) and the collectors (3) being constituted of the same baked enamel comprising metallic silver and situated on the face of the pane towards the interior of the vehicle, the electricity supply being provided by using the usual mains voltage for vehicles, characterized in that said pane reflects also the heat rays over the entirety of its surface by means of a semireflecting, abrasion-resistant and corrosion-resistant film (5), having a surface electrical resistance of 50 to 600 ohms per square, deposited by a technique of deposition under vacuum in such a way as to cover the entire surface area of the pane facing towards the interior of the passenger compartment, that of the network of wires (4) as well as that of the collectors (3) associated with the wires (4), said film being constituted of a metallic compound of the group of the borides, carbides, nitrides, carbonitrides and oxides or suboxides of the metals: aluminium, titanium, zirconium, vanadium, chromium, molybdenum and tungsten.

2. Automobile pane according to Claim 1, characterized in that the conductor wires (4) have a width of from 0.4 to 0.6 millimetres and a thickness of from 15 to 20 micrometres.

3. Automobile pane according to one of Claims 1 or 2, characterized in that the semireflecting film (5) has a thickness of 20 to 100 nanometres.

4. Automobile pane according to one of the preceding Claims, characterized in that the light transmission of the semireflecting film (5) in the visible range is from 10 to 60% and the reflection in the spectral range greater than 1 µm is from 25 to 70%.

5. Automobile pane according to one of the preceding Claims, characterized in that the semireflecting film (5) is composed of titanium nitride.

6. Automobile pane according to one of the preceding Claims, characterized in that the conductor wires (4) and the collectors (3) are coated with a metallic film such as copper and/or nickel deposited by electrochemical deposition.

7. Automobile pane according to one of the preceding Claims, characterized in that an opaque, non-conducting enamel film (2) is deposited, prior to the network of wires (4) and collectors (3), on the periphery of the face of the pane that is towards the passenger compartment.

8. Automobile pane according to Claim 7, characterized in that most of the collectors (3) are deposited on the peripheral enamel film (2) and project towards the interior of the pane to meet the conductor wires (4).

9. Automobile pane according to one of the preceding Claims, characterized in that the semireflecting film (5) is deposited by the technique of reactive cathodic sputtering by magnetron.
